# EUROPÄISCHE PATENTSCHRIFT

(11) **EP 2 580 851 B1**
(45) Veröffentlichungstag und Bekanntmachung des Hinweises auf die Patenterteilung: **30.06.2021**
(21) Anmeldenummer: 11719544.6
(22) Anmeldetag: 12.05.2011
(51) Int. Cl.: H02K 9/06, B29C 45/14, F04D 29/26, F04D 29/28, B29L 31/08

(54) **ELEKTRISCHE MASCHINE MIT EINEM LÜFTERRAD**
ELECTRICAL MACHINE HAVING A FAN WHEEL
MACHINE ÉLECTRIQUE COMPRENANT UNE ROUE DE VENTILATEUR

(30) Priorität: 09.06.2010 DE 102010029836
(43) Veröffentlichungstag der Anmeldung: 17.04.2013
(73) Patentinhaber: SEG Automotive Germany GmbH, 70499 Stuttgart (DE)
(72) Erfinder: DIKMENLI, Erdogan, 71636 Ludwigsburg (DE)
(74) Vertreter: DehnsGermany Partnerschaft von Patentanwälten
(86) Internationale Anmeldenummer: PCT/EP2011/057661
(87) Internationale Veröffentlichungsnummer: WO 2011/154210

(56) Entgegenhaltungen:
- DE-A1- 1 961 299
- US-A- 4 957 414
- US-A1- 2005 106 024
- None

## Beschreibung

Die Erfindung bezieht sich auf eine elektrische Maschine mit einem Lüfterrad nach dem Oberbegriff des Anspruches 1, sowie auf ein Lüfterrad für eine elektrische Maschine.

### Stand der Technik

Bekannt sind Wechselstromgeneratoren für Kraftfahrzeuge, die mithilfe eines Lüfterrades während des Betriebs gekühlt werden, um eine Temperatur einhalten zu können, bei der eine optimale Leistung gewährleistet ist. Ein derartiger, mit einem Lüfterrad versehender Generator wird beispielsweise in der DE 692 01 498 T2 beschrieben. Das aus dieser Druckschrift bekannte Lüfterrad besteht aus einem ringförmigen Einlegeteil aus Metall und einem als Kunststoff-Formteil ausgebildeten Schaufelträgerring mit Lüfterschaufeln. Der Schaufelträgerring wird auf das Metall-Einlegeteil aufgeformt, das eine zentrische Ausnehmung zum Aufsetzen auf eine Welle besitzt. Das ringförmige Einlegeteil ist fast vollständig von dem Kunststoff des Schaufelträgerrings umschlossen, was den Nachteil hat, dass auf Grund der isolierenden Eigenschaften Wärme schlechter abgeleitet werden kann, welche sich von der Welle ausgehend, auf der der Lüfterring aufsitzt, ausbreitet.

Auch aus der US 5,977,668 ist ein Wechselstromgenerator mit einem Lüfterrad bekannt, das einen Kunststoff-Schaufelträgerring mit daran ausgebildeten Lüfterschaufeln aufweist sowie ein Metall-Einlegeteil, das eine Nabe zum Aufsetzen auf eine Welle bildet, wobei der Kunststoff-Schaufelträgerring den radial außen liegenden Teil und das Einlegeteil den radial innen liegenden Teil des Lüfterrades bildet. Bei dieser Ausführung ist auch unter wechselnden äußeren Bedingungen, insbesondere bei verschiedenen Temperaturen, auf eine ausreichende Haftung zwischen dem Kunststoff des Schaufelträgerrings und dem Metall des Einlegeteils zu achten. Es muss gewährleistet sein, dass beispielsweise bei Temperaturwechseln der Schaufelträgerring sich nicht versehentlich vom Einlegeteil löst.

Die US 2005/0106024 A1 zeigt eine elektrische Maschine mit einem Lüfterrad, das im Spritzgießverfahren hergestellt ist und einen Schaufelträgerring sowie Lüfterschaufeln aufweist. In das Lüfterrad ist ein Einlegeteil eingesetzt, das den Schaufelträgerring des Lüfterrades in einen Grundkörper und in Lüfterschaufeln unterteilt. In das Einlegeteil sind Durchgangsöffnungen eingebracht, durch die das Material des Schaufelträgerrings hindurchtritt, wodurch der Grundkörper mit den Lüfterschaufeln verbunden wird.

Die US 4 957 414 A und die DE 1 961 299 A zeigen jeweils ein Lüfterrad mit einem Einlegeteil, um das ein Schaufelträgerring mit einem Grundkörper und mit Lüfterschaufeln gespritzt wird.

### Offenbarung der Erfindung

Der Erfindung liegt die Aufgabe zu Grunde, auch unter wechselnden Betriebsbedingungen eine effiziente Kühlung in einer elektrischen Maschine zu gewährleisten.

Diese Aufgabe wird erfindungsgemäß durch eine elektrische Maschine sowie ein Lüfterrad für eine elektrische Maschine mit den Merkmalen des unabhängigen Patentanspruchs gelöst. Die Unteransprüche geben zweckmäßige Weiterbildungen an.

Bei der elektrischen Maschine handelt es sich insbesondere um einen Generator in einem Kraftfahrzeug, vorzugsweise einen Wechselstromgenerator bzw. Drehstromgenerator. Grundsätzlich kommen aber auch Elektromotoren, insbesondere in Kraftfahrzeugen in Betracht.

Die elektrische Maschine weist zur Kühlung ein Lüfterrad auf, welches auf einer Welle der elektrischen Maschine angeordnet ist und mit der Welle umläuft. Das rotierende Lüfterrad erzeugt einen Luftstrom, der wesentlich zur Kühlung der elektrischen Maschine beiträgt.

Das Lüfterrad der elektrischen Maschine weist einen im Spritzgießverfahren hergestellten Schaufelträgerring mit einer Reihe von Lüfterschaufeln sowie ein ringförmiges Einlegeteil auf, welches in den Schaufelträgerring integriert ist. Zur Herstellung des Lüfterrades wird das ringförmige Einlegeteil von dem Material des Schaufelträgerrings umspritzt. Auf diese Weise kann in einem einzigen Arbeitsschritt das Einlegeteil in den Schaufelträgerring integriert und der Schaufelträgerring einschließlich der Lüfterschaufeln durch Spritzgießen erzeugt werden.

Das Einlegeteil besteht insbesondere aus Metall bzw. Blech, es handelt sich vorzugsweise um ein Stanzbauteil, welches aus einer entsprechenden Vorlage ausgestanzt wird. Grundsätzlich kommen aber auch sonstige Materialien für das Einlegeteil in Betracht, welches dem Lüfterrad eine verbesserte Stabilität verleiht. Um dies zu gewährleisten, besteht das Einlegeteil zweckmäßigerweise aus einem anderen Material als der Schaufelträgerring und besitzt insbesondere eine höhere Stabilität bzw. Festigkeit.

In das Einlegeteil sind Durchgangsöffnungen eingebracht, durch die sich das im Kunststoff-Spritzgießverfahren eingebrachte Material des Schaufelträgerrings ausbreitet, um die Lüfterschaufeln zu formen. Gegenüber Blechlüftern erhält man den Vorteil, dass eine erhöhte Schaufelanzahl und komplexe Schaufelgeometrien realisiert werden können, wodurch das Fördervolumen des Lüfters erhöht wird. Zudem kann die Wärmeableitung optimiert werden.

Über die Durchgangsöffnungen ist ein insbesondere ringförmiger Grundkörper des Schaufelträgerrings auf einer Stirnseite des Einlegeteils mit den auf der anderen Stirnseite des Einlegeteils angeordneten Lüfterschaufeln verbunden, so dass der Grundkörper, das Einlegeteil mit den Durchgangsöffnungen und die Lüfterschaufeln axial hintereinanderliegend angeordnet sind. Auf diese Weise ist Einteiligkeit zwischen dem Grundkörper des Schaufelträgerrings und den Lüfterschaufeln gewährleistet. Es ist insbesondere möglich, den Schaufelträgerring mit Grundkörper und Lüfterschaufeln in einem einzigen Spritzgießvorgang herzustellen, indem das Material des Schaufelträgerrings während des Spritzgießprozesses in eine das Einlegeteil aufnehmende Form bzw. Werkzeug eingebracht wird, wobei sich das Material durch die Durchgangsöffnungen im Einlegeteil zu beiden Seiten des Einlegteils ausbreiten kann.

Erfindungsgemäß sind benachbarte Lüfterschaufeln auf der Lüfterschaufelseite nicht unmittelbar miteinander verbunden, so dass die Stirnseite des Einlegeteils auf der Lüfterschaufelseite zwischen den Lüfterschaufeln frei liegt.

Mit dieser Ausführung werden verschiedene Vorteile erzielt. Zum einen ist eine sichere, formschlüssige Verbindung zwischen dem Schaufelträgerring und dem Einlegeteil gegeben, welches sich zwischen den verschiedenen Teilen des Schaufelträgerrings - dem ringförmigen Grundkörper auf einer Stirnseite und den Lüfterschaufeln auf der gegenüberliegenden Stirnseite - befindet. Der Formschluss besteht sowohl in Radialrichtung als auch in Achs- und Umfangsrichtung. Dadurch ist die mechanische Festigkeit der Verbindung erheblich verbessert, und es bleibt auch bei Temperaturwechseln gewährleistet, dass sich der Schaufelträgerring mit Grundkörper und Lüfterschaufeln nicht vom Einlegeteil lösen kann.

Der kleinste Innendurchmesser des Einlegeteils ist vorteilhafterweise kleiner als der kleinste Innendurchmesser des Schaufelträgerrings. Insbesondere bei einer Ausführung des Einlegeteils aus einem Material mit besserer Leitfähigkeit als der Spritzgieß-Schaufelträgerring ist dadurch eine gute Wärmeableitung radial von der Welle ausgehend, auf der das Lüfterrad aufsitzt, nach außen über das Einlegeteil gewährleistet. Es besteht somit zwischen dem die zentrische Ausnehmung begrenzenden Innendurchmesser des Einlegeteils und dem Innendurchmesser des Schaufelträgerrings, welcher größer ist, ein gegebenenfalls unterbrochener Ringbereich auf dem Einlegeteil, der frei ist vom Material des Schaufelträgerrings, so dass eine gute Wärmeabstrahlung in diesem Bereich gewährleistet ist.

Die Wärmeabstrahlung kann darüber hinaus noch dadurch verbessert werden, dass vorzugsweise lediglich die den Lüfterschaufeln gegenüberliegende Stirnseite des Einlegeteils flächig vom Material des Schaufelträgerrings bedeckt ist. Dagegen sind benachbarte Lüfterschaufeln auf der Lüfterschaufelseite erfindungsgemäß nicht unmittelbar miteinander verbunden, so dass die Stirnseite des Einlegeteils auf der Lüfterschaufelseite zwischen den Lüfterschaufeln frei liegt und ebenfalls für eine verbesserte Wärmeabstrahlung sorgt.

Gemäß einer vorteilhaften Weiterbildung ist vorgesehen, dass der Schaufelträgerring die radial außen liegende Umfangsseite des Einlegteils umschließt. Der Grundkörper des Schaufelträgerrings erstreckt sich radial bis über die Umfangsseite des Einlegeteils hinaus und befindet sich auch an der Umfangsseite, so dass der radiale Formschluss zwischen Schaufelträgerring und Einlegeteil weiter verbessert ist. Es ist außerdem eine koaxiale Ausrichtung von Schaufelträgerring und Einlegeteil mit hoher Genauigkeit gewährleistet.

Des Weiteren kann es vorteilhaft sein, an der radial außen liegenden Umfangsseite des Einlegeteils eine Formschlussgeometrie vorzusehen, die von dem Schaufelträgerring bedeckt ist. Die Formschlussgeometrie weist beispielsweise radiale Einbuchtungen und/oder Erhebungen auf, welche vom Material des Schaufelträgerrings ausgefüllt bzw. umschlossen sind. Im Falle von Einbuchtungen können diese vorzugsweise als dreieckförmige Einkerbungen ausgebildet sein. Auf diese Weise ist ein verbesserter Formschluss in Umfangs- und Radialrichtung zwischen Schaufelträgerring und Einlegeteil gegeben. Die Einbuchtungen bilden Lücken zwischen den Erhebungen. Die Umfangsseite des Einlegeteils kann nach Art einer Außenverzahnung ausgebildet sein, wobei die Zahnlücken die Einbuchtungen und die Zähne die Erhebungen bilden.

Die Durchgangsöffnungen befinden sich zweckmäßigerweise unmittelbar im Bereich der Lüfterschaufeln, welche durch die Durchgangsöffnungen hindurch gespritzt werden. Vorzugsweise befinden sich radial hintereinander liegend zwei Durchgangsöffnungen im Einlegeteil, die beide einer gemeinsamen Lüfterschaufel zugeordnet sind. Die Lüfterschaufel überdeckt die Durchgangsöffnung bzw. - öffnungen vollständig, wobei die Lüfterschaufeln einen größeren Querschnitt als die zugeordneten Durchgangsöffnungen aufwiesen, wodurch ein sicherer Formschluss in Achsrichtung gegeben ist und ein axiales Abheben der Lüfterschaufeln oder des Grundkörpers des Schaufelträgerrings vom Einlegeteil ausgeschlossen ist.

Die Wärmeableitung über das Einlegteil kann dadurch noch verbessert werden, dass der Innendurchmesser des Schaufelträgerteils vorzugsweise mindestens doppelt so hoch ist wie der Innendurchmesser des Einlegteils. Damit ist gewährleistet, dass ein Ringstreifen am Einlegeteil, der sich unmittelbar an die zentrisehe Ausnehmung anschließt, über eine signifikante radiale Breite frei vom Material des Schaufelträgerrings ist.

Das erfindungsgemäße Lüfterrad wird in einer elektrischen Maschine, insbesondere in einem Kraftfahrzeug eingesetzt. Bei einem nicht beanspruchten Verfahren zur Herstellung des Lüfterrads für eine elektrische Maschine wird das insbesondere als Stanzteil ausgeführte Einlegeteil in die Form bzw. das Werkzeug eingelegt, woraufhin im Kunststoff-Spritzgießverfahren das Material des Schaufelträgerrings insbesondere an der Seite des Einlegeteils eingespritzt wird, die einem Stanzgrat am Einlegeteil abgewandt ist. Über die Durchgangsöffnungen im Einlegeteil breitet sich der Kunststoff aus und kann die Lüfterschaufeln formen. Durch das Einspritzen in Stanzrichtung des Einlegeteils wird sichergestellt, dass das Fließen des Kunststoffes durch den Stanzgrat am Einlegeteil nicht negativ beeinflusst wird.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht einer bevorzugten Ausgestatlung eines erfindungsgemäßen Lüfterrads für eine elektrische Maschine, bestehend aus einem Kunststoff-Schaufelträgerring mit Lüfterschaufeln und einem ringförmigen Einlegeteil, das teilweise von dem Kunststoff des Schaufelträgerrings umspritzt ist,
- Fig. 2: das Lüfterrad in einer perspektivischen Ansicht von unten,
- Fig. 3: das Lüfterrad in Draufsicht,
- Fig. 4: das Lüfterrad in Seitenansicht,
- Fig. 5: das Lüfterrad in einer ähnlichen perspektivischen Darstellung wie Fig. 1, jedoch mit einem ausgeschnittenen Segment,
- Fig. 6: in vergrößerter Darstellung eine Schnittkante durch das Lüfterrad,
- Fig. 7: in perspektivischer Einzeldarstellung das Einlegeteil,
- Fig. 8: das Einlegeteil in Draufsicht,
- Fig. 9: ein Läufer einer elektrischen Maschine mit einem stirnseitig angeordneten Lüfterrad in perspektivischer Darstellung,
- Fig. 10: der Läufer aus Fig. 9 in Seitenansicht.

In den Figuren sind gleiche Bauteile mit gleichen Bezugszeichen versehen.

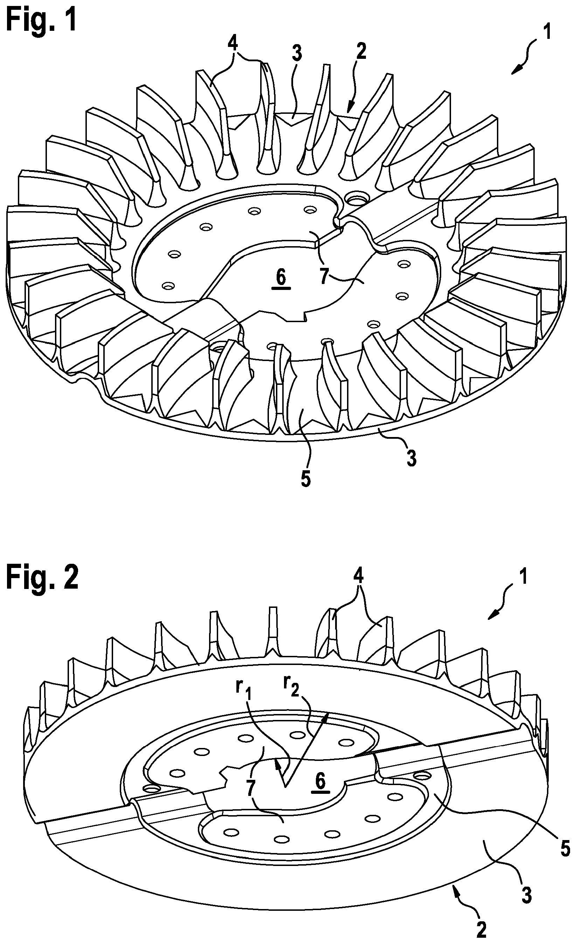

In den Figuren 1 bis 6 ist gemäß einer bevorzugten Ausgestaltung der Erfindung ein Lüfterrad 1 für eine elektrische Maschine dargestellt, mit einem Kunststoff-Schaufelträgerring 2 mit einem Grundkörper 3 und Lüfterschaufeln 4 und einem Einlegteil 5. Der Schaufelträgerring 2 wird im Spritzgießverfahren auf das Einlegeteil 5 aufgebracht, welches als Stanzteil ausgebildet und insbesondere aus Blech bzw. Metall gefertigt ist. Sowohl der Grundkörper 3 des Schaufelträgerrings 2 als auch das Einlegeteil 5 sind ringförmig ausgebildet und koaxial zueinander ausgerichtet und schließen eine zentrische Ausnehmung 6 ein, über die das Lüfterrad 1 auf eine tragende Welle aufgesetzt wird. Die zentrische Ausnehmung 6 ist unmittelbar von Begrenzungsabschnitten 7 begrenzt, welche einteilig mit dem Einlegeteil 5 ausgebildet sind.

Der Grundkörper 3 des Kunststoff-Schaufelträgerrings 2 ist ringförmig ausgebildet und bedeckt die Unterseite des Einlegeteils 5, welches der Schaufelseite gegenüberliegt, in einem ringförmigen Streifen. Zusätzlich erstreckt sich der Grundkörper 3 bis zur radial außen liegenden Umfangsseite des Einlegeteils und schließt die Umfangsseite ein, wobei das Einlegeteil 5 einen Außendurchmesser aufweist, der größer ist als der Innendurchmesser der Lüfterschaufeln 4. Vorzugsweise ist der Außendurchmesser des Einlegeteils 5 zumindest annähernd gleich wie der Außendurchmesser der Lüfterschaufeln 4. Die Umfangsseite des Einlegeteils 5 weist dreieckförmige Einkerbungen auf, welche ebenfalls von dem Kunststoffmaterial des Grundkörpers 3 des Schaufelträgerrings ausgefüllt sind.

Der Grundkörper 3 und die Lüfterschaufeln 4 befinden sich im wesentlichen auf gegenüberliegenden Seiten des Einlegeteils 5 und sind einteilig ausgebildet. Hierzu wird im Spritzgießverfahren das Kunststoffmaterial in ein Werkzeug, in welches das Einlegeteil 5 eingelegt ist, eingespritzt, wobei das Kunststoffmaterial durch Durchgangsöffnungen im Einlegteil 5 hindurchtritt und die Schaufeln 4 bildet.

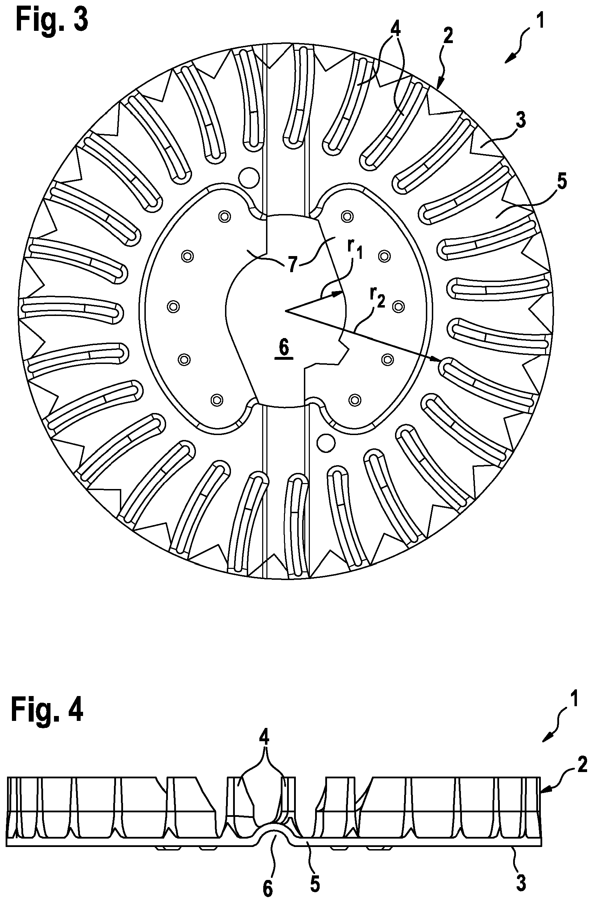

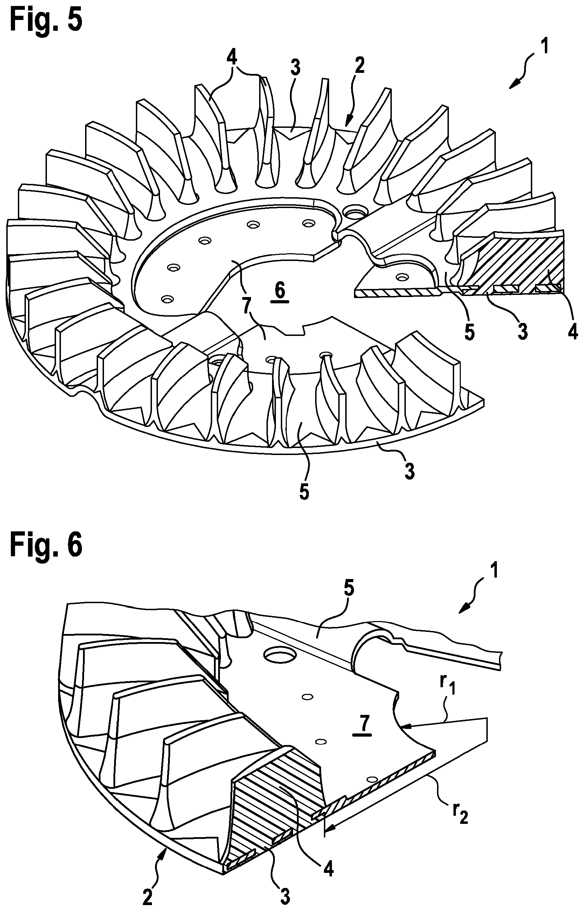

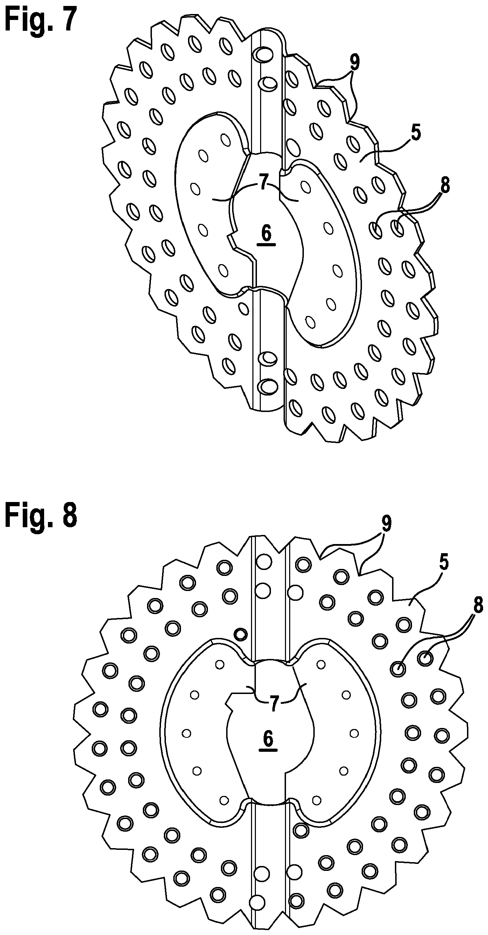

Der ringförmige Grundkörper 3 des Schaufelträgerrings 2 auf der Rückseite des Einlegeteils 5 weist einen Innenradius r₂ auf (Fig. 2, Fig. 6), wohingegen das Einlegteil 5 im Bereich der inneren Begrenzungsabschnitte 7 einen minimalen Innenradius r₁ besitzt, welcher signifikant kleiner ist als der Innenradius r₂ des Grundkörpers 3. Gleiches gilt für die Lüfterschaufeln 4 auf der Vorderseite des Einlegeteils 5, welche einen Innenradius aufweisen, der identisch mit dem Innenradius r₂ des Grundkörpers 3 (Fig. 3, Fig. 6) sein kann. Die beiden teilringförmigen Begrenzungsabschnitte 7 des Einlegeteils 5 sowie ein sich radial daran anschließender Streifen des Einlegeteils 5, der sich radial zwischen den Begrenzungsabschnitten 7 und dem Innenradius der Lüftschaufeln 4 erstreckt, sind somit frei vom Kunststoffmaterial des Schaufelträgerrings, wodurch eine gute Wärmeabstrahlung in diesem Bereich gewährleistet ist. Die Lüfterschaufeln 4 erstrecken sich zumindest annähernd in Radialrichtung und überdecken jeweils zwei radial hintereinander liegende Durchgangsöffnungen 8, die in das Einlegeteil 5 eingebracht sind, wie den Figuren 7 und 8 zu entnehmen ist. Die Durchgangsöffnungen 8 im Einlegeteil 5 besitzen einen kreisrunden Querschnitt, wobei grundsätzlich auch nicht-runde Querschnittsformen in Betracht kommen, beispielsweise Ausführungen als Langlöcher. Im fertig gestellten Zustand überdeckt die Basis jeder Lüfterschaufel 4 die beiden zugeordneten Durchgangsöffnungen 8 vollständig. Über die Durchgangsöffnungen 8 erfolgt die Verbindung zwischen dem Grundkörper 3 und den Lüfterschaufeln 4.

Grundsätzlich möglich ist es auch, lediglich eine oder eine größere Anzahl von Durchgangsöffnungen pro Lüfterschaufel vorzusehen, über die das Kunststoffmaterial beim Herstellungsprozess hindurchgespritzt wird. Die Durchgangsöffnungen 8 haben zudem eine Formschlussverbindungsfunktion, da auf Grund der Einteiligkeit von ringförmigem Grundkörper 3 auf der einen Seite des Einlegeteils 5 und Lüfterschaufeln 4 auf der anderen Seite des Einlegeteils eine feste Verbindung zwischen Schaufelträgerring 2 und Einlegeteil 5 in Radialrichtung, Axialrichtung sowie Umfangsrichtung gewährleistet ist.

In den Figuren 7 und 8 ist außerdem zu erkennen, dass der Umfangsrand des Einlegeteils 5 mit dreieckförmigen Einkerbungen 9 versehen ist, welche im fertigen Zustand von dem Material des Kunststoffkörpers ausgefüllt sind. Dies ist beispielsweise den Figuren 1, 3 und 5 zu entnehmen.

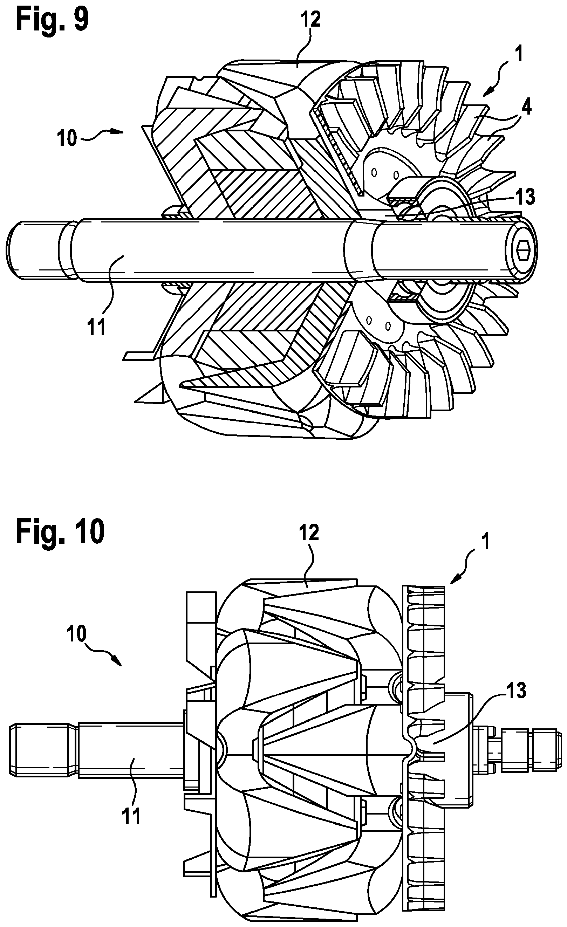

In den Figuren 9 und 10 ist ein Teil einer elektrische Maschine dargestellt, welche einen Läufer 10 mit einer Welle 11 und einem auf die Welle aufgeschobenen Klauenpolpaar12 umfasst. Das Lüfterrad 1 ist unmittelbar an das Klauenpolpaar 12 bzw. am Eisenteil anschließend auf die Welle 11 aufgeschoben und drehfest mit dieser verbunden. Die Verbindung zwischen dem Lüfterrad 1 und der Welle 11 erfolgt über eine Nabe 13, welche auf die Welle 11 aufgesetzt und mit der das Lüfterrad 1 im Bereich der Begrenzungsabschnitte 7 des Einlegeteils 5 fest verbunden, beispielsweise aufgeschweißt ist.

Zusätzlich oder alternativ zur Verbindung über die Nabe 13 kann das Lüfterrad 1 auch axial am Eisenteil, beispielsweise dem Klauenpolpaar 12 befestigt werden, insbesondere über eine Schweißverbindung. Hierfür können beispielsweise an der Stirnseite des Begrenzungsabschnitts 7 Schweißpunkte bzw. -buckel vorgesehen sein.

## Patentansprüche

1. Elektrische Maschine mit einem Lüfterrad, wobei das Lüfterrad zumindest einen Spritzgieß-Schaufelträgerring mit einem Grundkörper (3) und mit Lüfterschaufeln (4) sowie ein in den Schaufelträgerring (2) integriertes, ringförmiges Einlegeteil (5) aufweist, wobei in das Einlegeteil (5) Durchgangsöffnungen (8) eingebracht sind, über die der Grundkörper (3) des Schaufelträgerrings (2) mit den Lüfterschaufeln (4) einteilig verbunden ist, wobei der Grundkörper (3) des Schaufelträgerrings (2), das Einlegeteil (5) mit den Durchgangsöffnungen (8) und die Lüfterschaufeln (4) axial hintereinanderliegend angeordnet sind, **dadurch gekennzeichnet, dass** benachbarte Lüfterschaufeln (4) auf der Lüfterschaufelseite nicht unmittelbar miteinander verbunden sind, so dass die Stirnseite des Einlegeteils (5) auf der Lüfterschaufelseite zwischen den Lüfterschaufeln (4) frei liegt.

2. Elektrische Maschine nach Anspruch 1, **dadurch gekennzeichnet, dass** der kleinste Innenradius (r₁) des Einlegeteils (5) kleiner ist als der kleinste Innenradius (r₂) des Schaufelträgerrings (2).

3. Elektrische Maschine nach Anspruch 1 oder 2, **dadurch gekennzeichnet, dass** die Lüfterschaufeln (4) über ihre gesamte radiale Erstreckung auf einer Stirnseite des Einlegeteils (5) aufliegen.

4. Elektrische Maschine nach einem der Ansprüche 1 bis 3, **dadurch gekennzeichnet, dass** die den Lüfterschaufeln (4) gegenüberliegende Stirnseite des Einlegeteils (5) flächig vom Material des Schaufelträgerrings (2) bedeckt ist.

5. Elektrische Maschine nach einem der Ansprüche 1 bis 4, **dadurch gekennzeichnet, dass** der Schaufelträgerring (2) die radial außen liegende Umfangsseite des Einlegeteils (5) umschließt.

6. Elektrische Maschine nach einem der Ansprüche 1 bis 5, **dadurch gekennzeichnet, dass** die radial außen liegende Umfangsseite des Einlegeteils (5) mit einer Formschlussgeometrie in Form von radialen Einbuchtungen (9) bzw. Erhebungen versehen ist und die Formschlussgeometrie vom Schaufelträgerring (2) bedeckt ist.

7. Elektrische Maschine nach Anspruch 6, **dadurch gekennzeichnet, dass** die Einbuchtungen (9) als dreieckförmige Einkerbungen ausgebildet sind.

8. Elektrische Maschine nach einem der Ansprüche 1 bis 7, **dadurch gekennzeichnet, dass** die Lüfterschaufeln (4) die zugeordneten Durchgangsöffnungen (8) überdecken.

9. Elektrische Maschine nach einem der Ansprüche 1 bis 8, **dadurch gekennzeichnet, dass** pro Lüfterschaufel (4) zwei Durchgangsöffnungen (8) vorgesehen sind, die in Radialrichtung hintereinanderliegend in das Einlegeteil (5) eingebracht sind.

10. Elektrische Maschine nach einem der Ansprüche 1 bis 9, **dadurch gekennzeichnet, dass** das Einlegeteil (5) als ein Stanzteil ausgeführt ist.

11. Elektrische Maschine nach Anspruch 10, **dadurch gekennzeichnet, dass** die Lüfterschaufeln (4) auf der einen Stanzgrat aufweisenden Seite des Einlegeteils (5) angeordnet sind.

12. Elektrische Maschine nach einem der Ansprüche 1 bis 11, **dadurch gekennzeichnet, dass** der Innenradius (r₂) des Schaufelträgerrings (2) mindestens doppelt so groß ist wie der Innenradius (r₁) des Einlegeteils (5).

13. Elektrische Maschine nach einem der Ansprüche 1 bis 12, **dadurch gekennzeichnet, dass** das Einlegeteil (5) einen Außendurchmesser aufweist, der größer ist als der Innendurchmesser der Lüfterschaufeln (4).

14. Lüfterrad für eine elektrische Maschine nach einem der Ansprüche 1 bis 13.

## Claims

1. Electrical machine with a fan wheel, wherein the fan wheel comprises at least an injection-moulded blade carrier ring with a base body (3) and with fan blades (4) as well as an annular insertion part (5) integrated into the blade carrier ring (2), wherein through-openings (8) are provided in the insertion part (5), via which the base body (3) of the blade carrier ring (2) is connected in an integral manner to the fan blades (4), wherein the base body (3) of the blade carrier ring (2), the insertion part (5) with the through-openings (8) and the fan blades (4) are arranged axially one behind the other, **characterized in that** adjacent fan blades (4) are not directly connected to one another on the fan blade side, so that the end face of the insertion part (5) is exposed between the fan blades (4) on the fan blade side.

2. Electrical machine according to claim 1, **characterized in that** the smallest inner radius (r₁) of the insertion part (5) is smaller than the smallest inner radius (r₂) of the blade carrier ring (2).

3. Electrical machine according to claim 1 or 2, **characterized in that** the fan blades (4) rest over their entire radial extent on an end face of the insertion part (5).

4. Electrical machine according to any one of claims 1 to 3, **characterized in that** the end face of the insertion part (5) opposite to the fan blades (4) is covered over its surface by the material of the blade carrier ring (2).

5. Electrical machine according to any one of claims 1 to 4, **characterized in that** the blade carrier ring (2) surrounds the radially outer circumferential side of the insertion part (5).

6. Electrical machine according to any one of claims 1 to 5, **characterized in that** the radially outer circumferential side of the insertion part (5) is provided with a form-fit geometry in the form of radial indentations (9) or elevations and the form-fit geometry is covered by the blade carrier ring (2).

7. Electrical machine according to claim 6, **characterized in that** the indentations (9) are formed as triangular notches.

8. Electrical machine according to any one of claims 1 to 7, **characterized in that** the fan blades (4) cover the associated through-openings (8).

9. Electrical machine according to any one of claims 1 to 8, **characterized in that** two through-openings (8) are provided per fan blade (4), which are provided in the insertion part (5) one behind the other in the radial direction.

10. Electrical machine according to any one of claims 1 to 9, **characterized in that** the insertion part (5) is designed as a stamped part.

11. Electrical machine according to claim 10, **characterized in that** the fan blades (4) are arranged on the side of the insertion part (5) having a stamping ridge.

12. Electrical machine according to any one of claims 1 to 11, **characterized in that** the inner radius (r₂) of the blade carrier ring (2) is at least twice as large as the inner radius (r₁) of the insertion part (5).

13. Electrical machine according to any one of claims 1 to 12, **characterized in that** the insertion part (5) has an outer diameter which is larger than the inner diameter of the fan blades (4).

14. Fan wheel for an electrical machine according to any one of claims 1 to 13.

## Revendications

1. Machine électrique ayant une roue de ventilateur, dans laquelle la roue de ventilateur comporte au moins une couronne de support d'ailettes moulée par injection avec un corps principal (3) et des ailettes de ventilateur (4) ainsi qu'une pièce d'insertion annulaire (5), intégrée dans la couronne de support d'ailettes (2), dans laquelle des orifices de passage (8) sont réalisés dans la pièce d'insertion (5), le corps principal (3) de la couronne de support d'ailettes (2) étant relié d'un seul tenant aux ailettes de ventilateur (4) par l'intermédiaire des orifices de passage, dans laquelle le corps principal (3) de la couronne de support d'ailettes (2), la pièce d'insertion (5) avec les orifices de passage (8) et les ailettes de ventilateur (4) sont agencés axialement les uns derrière les autres, **caractérisée en ce que** les ailettes de ventilateur (4) adjacentes ne sont pas directement reliées les unes aux autres du côté des ailettes de ventilateur, de sorte que la face frontale de la pièce d'insertion (5) du côté des ailettes de ventilateur est exposée entre les ailettes de ventilateur (4).

2. Machine électrique selon la revendication 1, **caractérisée en ce que** le plus petit rayon intérieur (r₁) de la pièce d'insertion (5) est inférieur au plus petit rayon intérieur (r₂) de la couronne de support d'ailettes (2).

3. Machine électrique selon la revendication 1 ou 2, **caractérisée en ce que** les ailettes de ventilateur (4) reposent, sur toute leur extension radiale, sur une face frontale de la pièce d'insertion (5).

4. Machine électrique selon l'une des revendications 1 à 3, **caractérisée en ce que** toute la surface de la face frontale de la pièce d'insertion (5) opposée aux ailettes de ventilateur (4) est recouverte du matériau de la couronne de support d'ailettes (2).

5. Machine électrique selon l'une des revendications 1 à 4, **caractérisée en ce que** la couronne de support d'ailettes (2) entoure la face circonférentielle radialement extérieure de la pièce d'insertion (5).

6. Machine électrique selon l'une des revendications 1 à 5, **caractérisée en ce que** la face circonférentielle radialement extérieure de la pièce d'insertion (5) a une géométrie d'assemblage par complémentarité de formes ayant la forme d'indentations (9) ou de saillies, et la géométrie d'assemblage par complémentarité de formes est recouverte par la couronne de support d'ailettes (2).

7. Machine électrique selon la revendication 6, **caractérisée en ce que** les indentations (9) sont formées comme des entailles triangulaires.

8. Machine électrique selon l'une des revendications 1 à 7, **caractérisée en ce que** les ailettes de ventilateur (4) recouvrent les orifices de passage (8) associés.

9. Machine électrique selon l'une des revendications 1 à 8, **caractérisée en ce que** pour chaque ailette de ventilateur (4) sont prévues deux orifices de passage (8) qui sont réalisés dans la pièce d'insertion (5) l'un derrière l'autre dans une direction radiale.

10. Machine électrique selon l'une des revendications 1 à 9, **caractérisée en ce que** la pièce d'insertion (5) est réalisée comme une pièce estampée.

11. Machine électrique selon la revendication 10, **caractérisée en ce que** les ailettes de ventilateur (4) sont agencées sur la face de la pièce d'insertion (5) comportant une arête d'estampage.

12. Machine électrique selon l'une des revendications 1 à 11, **caractérisée en ce que** le rayon intérieur (r₂) de la couronne de support d'ailettes (2) est au moins deux fois aussi grand que le rayon intérieur (r₁) de la pièce d'insertion (5).

13. Machine électrique selon l'une des revendications 1 à 12, **caractérisée en ce que** la pièce d'insertion (5) a un diamètre extérieur qui est supérieur au diamètre intérieur des ailettes de ventilateur (4).

14. Roue de ventilateur pour une machine électrique selon l'une des revendications 1 à 13.
